# EUROPEAN PATENT APPLICATION

(11) **EP 2 930 408 A1**
(43) Date of publication of application: **14.10.2015**
(21) Application number: 15161927.7
(22) Date of filing: 31.03.2015
(51) Int. Cl.: F16K 31/06

(54) **METHOD FOR CONTROLLING AN ELECTROMAGNETIC ACTUATED SAFETY VALVE AND FLUID FUEL PORTABLE HEATER FOR WARMING AIR HAVING SAID VALVE**

(30) Priority: 09.04.2014 IT MI20140658
(71) Applicant: MCS Italy S.p.A., 37010 Pastrengo, Verona (IT)
(72) Inventor: Giaretta, Enzo, I-37010 Pastrengo, VERONA (IT); Verani, Stefano, I-37010 Pastrengo, VERONA (IT); Galletti, Davide, I-37010 Pastrengo, VERONA (IT); Romagnani, Ugo, I-37010 Pastrengo, VERONA (IT); Lorenzi, Sergio, I-37010 Pastrengo, VERONA (IT)
(74) Representative: Leihkauf, Steffen Falk

(57) **Abstract**

A method for controlling an electromagnetic actuated safety valve (1) for a fluid, connectable to a duct (20) suitable to be passed through by said fluid (21) during an operational time interval,
said safety valve (1) comprising an occlusion member (2) movable between a first position and a second position, and electromagnetic actuation means (3) suitable to generate an electromagnetic field to actuate the occlusion member (2); said method comprising the steps of electrically supplying said electromagnetic actuation means (3) at an actuation electric voltage value (V1) through the duration of an actuation time interval (12), such as to displace said occlusion member (2) from the first position to the second position; automatically decreasing the electric voltage from said actuation electric voltage value (V1) to a maintenance electric voltage value (V2), lower than the actuation electric voltage value (V1) and such as to hold the occlusion member (2) in said second position, for a transient time interval (14) subsequent to said actuation time interval (12); continuing to electrically supply the electromagnetic actuation means (3) at said maintenance voltage value (V2) during a maintenance time interval (13) so as to hold the occlusion member (2) in said second position until the end of said operational time interval, wherein the occlusion member (2) automatically returns from said second position to said first position. In addition, a portable heater (100) powered by a fluid fuel (21), in particular gaseous, comprising a combustion chamber (101), a conveyance duct (20) for said fuel (21) that flows into said combustion chamber (101), an electromagnetically actuated hydraulic safety valve (1) of the normally closed type and an electronic control unit (30) to implement said method.

## Description

### Field of the invention

This invention relates to a method for controlling a safety valve, in particular for a portable heater powered by fluid fuel, for example a gas or liquid, in particular for functioning independently of an external source of electricity. Furthermore, this invention relates to a fluid fuel portable heater for heating air having such a safety valve and a control unit for controlling the valve using the above-mentioned method.

### State of the art

In the field of portable heaters powered by fluid fuel, for example a gas or liquid fuel, there is a need to reduce the consumption of electricity absorbed by the electro-mechanical components mounted on board, required for operation of the heater, for example electric fans, electric hydraulic pumps and electric control units.

These devices must be easily transportable and usable even in environments without an electricity distribution grid. For this purpose, an on-board source of electricity must be provided. In order to facilitate the portability of the heater this energy source should be light and compact. In order to ensure a high duration of operating autonomy of the heater in an environment where there is no electricity distribution grid, the above-mentioned source of energy must be of high electrical power.

Unfortunately, however, the lightness and the high power of the energy source are conflicting requirements, since the greater the capacity of the electrical power of the energy source, the greater is its weight and bulk.

For this reason, the known heaters require a power source or an on-board generator, generally very bulky and heavy.

For example, some known heaters comprise an electric accumulator, or battery, the weight and dimensions of which depend proportionally on the electricity to be dispensed to power the on-board electric devices necessary for the operation of the heater and the desired time of autonomous operation of the heater.

In order to obtain a high duration of autonomous operation, in particular equal to the reserve of fuel available to the heater, several attempts have been made to provide the heater with cells for the direct conversion of energy, for example based on the Seebeck effect, from thermal energy generated by a temperature differential between the combustion chamber of the heater and the external environment, to electricity available to the electrical electromechanical devices on board the heater. However, such known attempts proved difficult to implement because of a high demand for electricity from the electrical devices on board the heater, necessary for its operation.

In fact, the electricity produced by these conversion cells depends on the surface that these cells have for the exchange of heat with the combustion chamber and the outside, so to obtain a sufficient power output, it is necessary to distribute a high number of cells along the walls of the combustion chamber, but this requires making combustion chambers with large surfaces and, thus, heaters of large dimensions that are difficult to transport.

Among the electrical or electromechanical devices required to operate a fluid fuel heater, in particular a gas heater, sometimes requires a safety valve suitable to instantly interrupt the flow of fuel to the combustion chamber in case of failure, or the extinguishing of the flame, so as to avoid a dangerous unwanted escape of gas.

Among other things, the laws of some States require the installation of a safety valve on portable gas heaters.

In gas fuelled heaters, such valves can be of the "normally closed" type, i.e., when they are not powered by an electric voltage, they push an occlusion member in a position such as to prevent the involuntary escape of gas through a conveyance duct and thus preventing the flow of gas to pass through the duct.

To open the gas passage and, thus, allow the flow to the combustion chamber, it is necessary to electrically power an actuating device of such a valve, for the entire duration of the operation 12 of the heater. This means that keeping the valve in the open position requires a continuous supply of electricity to the actuating device.

An example of a valve used for this purpose in known portable heaters is a solenoid valve, which comprises a solenoid inside of which a piston comprising the occlusion member can slide. The solenoid, when crossed by an electric current, generates an electromagnetic field that attracts and retains the piston and, thus, the occlusion member, in the open position allowing the flow of fuel to the combustion chamber.

Sometimes, the return of the occlusion member to the closed position is aided by a spring that pushes the piston and, thus, the occlusion member in the closed position. This means that the electromagnetic field generated by the electrical voltage applied must be sufficient to contrast the elastic force for the entire duration of the operation of the heater.

Such valves are designed to be actuated at a nominal voltage sufficient to move the occlusion member from the closed position to the open position, also counteracting the elastic action that pushes the occlusion member toward the closed position.

Sometimes, heaters powered by liquid fuel, such as diesel or kerosene, may comprise a safety valve of the "normally open" type, mounted on a return duct, which connects a conveyance duct between an electric pump assembly and a spray nozzle to dispense the fuel to the combustion chamber, with a fuel tank.

During operation of the heater, this valve is hold closed by an electromagnetic body to allow the fuel pressure of fuel in the conduit upstream of the nozzle, to overcome a minimum pressure sufficient for the atomization of the fuel through the nozzle.

If an anomaly occurs, the electricity supply of the valve is immediately interrupted, and the valve automatically opens causing the pressure of the fuel upstream from the atomizer to drop to a pressure value lower than the minimum atomization pressure.

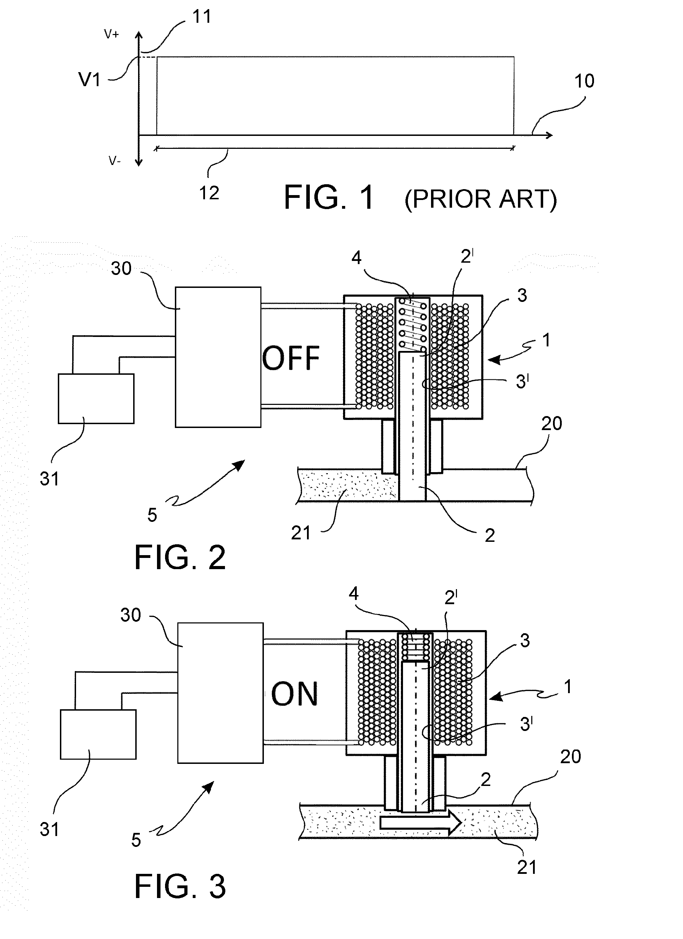

A method for the electrical powering of a safety valve of the normally closed or normally open type, with electromechanical actuation according to the prior art is shown in Figure 1, in which a graph showing the time on the abscissa 10 and the supply voltage on the ordinate 11, shows a continuous and constant supply voltage, equal to the nominal voltage, throughout the working time interval 12 of the heater.

These known heaters comprising an electromagnetically actuated safety valve, electrically powered according to the prior art, are not free from disadvantages.

In fact, during the working time interval of the heater, such safety valves powered according to the prior art absorb a quantity of electricity corresponding to the nominal actuation voltage.

By way of example, an electromagnetically actuated valve generally used in known heaters is powered with a voltage of 12V and an electric current of about 0.65A, which entails an energy consumption in terms of absorbed power of 8W.

Such a value of absorbed power, while being quite acceptable when the heater is connected to an electricity distribution grid, is absolutely excessive and unusable when the heater is powered exclusively by an on-board source of electricity.

Therefore, there is a need to reduce the amount of electricity required to actuate the safety valve during the interval of operation of the heater.

In particular, none of the known solutions described above provide a portable heater powered by fluid fuel, in particular gas or liquid fuel, able to operate independently from an electricity distribution grid and that at the same time has compact dimensions, is lightweight and easily portable, and provides a very high duration of uninterrupted operation and possibly longer than the continuous availability of fuel.

Moreover, none of the above solutions provides a method for reducing the amount of electricity consumed by a safety valve to intercept a flow of fuel mounted on board a portable gas heater.

### Summary of the invention

A purpose of the invention is to devise and make available a method for controlling an electromagnetically actuated safety valve of the normally closed, or normally open, type that meets the above needs and, at least partially, overcomes the drawbacks complained about above with reference to the prior art.

Moreover, a purpose of this invention is to provide a fluid fuel portable heater for heating air that meets the above needs and, at least partially, overcomes the drawbacks complained about above with reference to the prior art.

In particular, a purpose of this invention is to reduce the amount of electricity necessary for the operation of a safety valve for a fluid fuel portable heater, for example gas or liquid fuel, while ensuring the safety of interruption of the fuel flow to the burner in dangerous situations, for example in case of unwanted extinction of the flame, or a decrease or absence of electrical voltage.

Another purpose of this invention is to provide a fluid fuel portable heater, for example gas, able to ensure the safety of the interruption of flow in the event of a dangerous situation and, at the same time, able to ensure continuous completely independent from external power sources operation while being compact and extremely lightweight.

A further purpose of this invention is to provide a fluid fuel portable heater that consumes less electricity and, therefore, can be powered by a more compact and lightweight battery or that requires a system for the self-generation of electricity having lower overall power and, thus being more compact.

These and further purposes and advantages are achieved by a method for controlling a safety valve according to claim 1, and through a fluid fuel portable heater for heating air comprising a safety valve and an electronic control unit for implementing the above-mentioned control method.

According to a general embodiment of the invention, the above-mentioned method comprises a step of electrically supplying said electromagnetic actuation means at an actuation electric voltage value for an actuation time interval such as to displace said occlusion member from the first position to the second position.

This method comprises a subsequent step of decreasing the electric voltage from said actuation electric voltage value to a maintenance electric voltage value lower than the actuation electric voltage value and such as to hold the occlusion member in said second position, for a transient time interval subsequent to said actuation time interval.

The method also comprises a step of continuing to electrically power the electromagnetic actuation means at said maintenance voltage value for a maintenance time interval to hold the occlusion member in said second position until the end of said operation time interval, in which the occlusion member automatically returns from said second position to said first position.

Advantageously, when the occlusion member is in a retracted position, it is superimposed on the electromagnetic actuation means for a distance greater than the position that it occupies when it is in the extracted position. This means that for the same supply voltage of the electromagnetic actuation means, the electromagnetic force of attraction that such electromagnetic actuation means exert on the occlusion member is greater when the occlusion member is in the retracted position than when it is in the extended position. So, holding the occlusion member in the retracted position, after moving from the extended position to the retracted position, requires less voltage than that required to move the occlusion member.

Consequently, the step of reducing the electric power supply voltage of the electromagnetic actuating means after completion of the stroke of the occlusion member from the extended position to the retracted position of the occlusion member, and the step of continuing to power at this reduced voltage, allows reducing the energy consumption required by the safety valve to be maintained in the open position in the case of a normally closed valve, or in the closed position in the case of a normally open valve, and still ensure safe operation.

The above features also allow providing a portable heater powered by fluid fuel, for example gas, able to guarantee a continuous operation completely independent from external power sources for a long operating interval, thanks to a requirement for electricity from the safety valve that is greatly reduced compared to that of the prior art, while ensuring, at the same time, a high safety of operation.

Thanks to these features, it is possible to continue to ensure safe operation of an electromagnetically actuated safety while reducing energy consumption, or absorbed electrical power, by about 9/10.

### Brief description of figures

Further characteristics and advantages of this invention will result from the following description of preferred embodiments, provided as non-limiting examples, with reference to the accompanying figures, wherein:
- Figure 1 schematically shows a method of electrically powering an electromagnetically actuated safety valve according to the prior art;
- Figures 2 and 3 schematically show a valve assembly controlled according to the invention, comprising an electromagnetically actuated hydraulic safety valve and an automatic electronic control unit, in which Figure 2 shows the valve in the closed position with an occlusion member in the extracted position, and Figure 3 shows the valve in the open position with its occlusion member in the retracted position;
- Figures 4 to 6 schematically show three respective possible electric power supply voltage trends according to the method according to the invention;

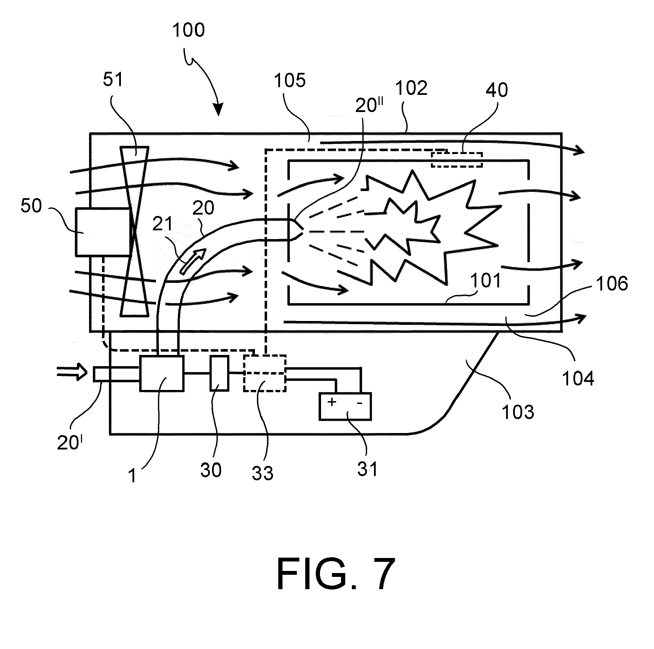

- Figure 7 schematically shows a section of a portable heater powered by fluid fuel, in particular gas, according to the invention, having a valve assembly controlled according to the invention;
- Figure 8 schematically shows an example of use of a safety valve of the normally closed type applied to a gas air heater;
- Figure 9 schematically shows an example of use of a safety valve of the normally open type applied to a liquid fuel air heater.

### Description of several preferred embodiments

With reference to the figures, a fluid fuel portable heater, according to the invention, is generally designated by the reference number 100.

The heater 100 comprises a combustion chamber 101 inside of which a fluid fuel 21 is conveyed and combustion takes place in the presence of ambient air. The heat generated by combustion is diffused in the environment to be heated, for example by a forced flow of air and combustion products, for example via one or more electric drive fans 51 placed upstream of the combustion chamber 101 so as to introduce a part of combustion air in the combustion chamber to facilitate the combustion itself and, in particular, a part of air to lap the outside of the combustion chamber 101 and be introduced heated into environment.

Around and outside the combustion chamber 101 there can be a housing or casing 102 that forms an obligatory passage for the air that, lapping the outside of the combustion chamber, is heated and, at the same time, thermally insulates the casing to avoid the risk of contact burns.

In other words, the combustion chamber 101 and the casing 102 together form an annular passage 104, for example cylindrical, with an annular inlet opening 105 upstream of the combustion chamber 101 and an annular outlet opening 106 downstream of the chamber combustion 101.

The heater comprises a conveyance duct 20 for said fuel 21, opening into said combustion chamber 101. This duct 20 has an inlet 20' for the fuel and an opposite outlet 20", in particular comprising a nozzle facing the inside of the combustion chamber 101. The inlet 20' of the duct is preferably directed toward the outside of the heater 100, and may comprise an attachment portion, such as a sealing quick-connector, to engage a tube (not shown) coming from a fuel tank or gas cylinder, preferably outside of the heater, or from a liquid or gas fuel distribution network.

The heater 100 also comprises a safety valve 1 mounted in the conveyance duct 20, in particular interposed between the inlet of the duct 20' and the outlet of the duct 20", or upstream of the outlet of the duct 20". Such a safety valve is suitable to intercept or prevent the flow of fluid in the duct and, for this reason, it will sometimes be referred to as a hydraulic valve.

The safety valve 1 comprises an occlusion member 2 movable between a first position and a second position.

For example, in the first position the occlusion member 2 is in the extended position and prevents the fuel 21 from flowing in the duct 20 and, in the second position, the occlusion member 2 is in the retracted position and allows the fuel 21 to flow in the duct 20.

Or, for example, in the first position the occlusion member 2 is in the retracted position and allows the fuel 21 to flow in the duct 20 and, in the second position, the occlusion member 2 is in the extended position and prevents the fuel 21 from flowing in the duct 20.

The safety valve 1 also comprises electromagnetic actuation means 3 configured to move the occlusion member 2 from the first position to the second position, and hold the occlusion member in the second position, when the actuation means are powered at an actuation electric voltage value V1. These electromagnetic actuation means 3 are also configured to automatically release the occlusion member 2 to make it return from the second position to the first position when the electromagnetic actuation means are powered at an electrical maintenance voltage value V2, or cease being powered.

According to an embodiment, in the first position of the occlusion member 2, the valve is in a fully closed valve position and the occlusion member 2 prevents the fluid from flowing in the duct 20, while, in the second position of the occlusion member 2, the valve is in the fully open valve position and the occlusion member 2 allows the passage of fluid through the duct 20.

In other words, such a safety valve is of the "normally closed", type, i.e., if it is not powered, or when it is powered with a voltage lower than a nominal voltage value, it remains closed. To open, it must be powered with a voltage not lower than an actuation, or nominal, voltage. When the power supply stops, or goes below a pre-set minimum maintenance voltage, the valve automatically returns to the closed position. This allows to immediately and automatically interrupting the flow of fuel.

This valve, when it is not actuated or powered, is closed and prevents the fuel to flow through the duct. To open it and allow the flow in the duct, it must be electrically actuated, i.e., the electromagnetic actuation means 3 must be electrically powered. The valve must be electrically powered with continuity for the entire time interval of operation of the heater, or the entire time interval in which a flame in the combustion chamber has to be maintained.

This type of safety valve of the "normally closed" type is particularly suitable for a gas heater, when the valve is mounted along the duct 20, between an inlet 20' for the gas and outlet 20" in the combustion chamber.

An example of a normally closed valve 1 used in the heater 100 according to the invention is a valve of the solenoid type, wherein the electromagnetic actuation means 3 comprise at least one electric coil or solenoid, wherein this solenoid defines an internal space 3', substantially cylindrical, suitable to slidably accommodate a pin or piston 2', for example made of ferromagnetic material, comprising the occlusion member 2.

The solenoid 3 is suitable to attract and hold, in the internal space 3', the occlusion member in the retracted position, when said electrical coil is electrically powered, and is suitable to release it in the extracted position when the coil is not electrically powered.

Sometimes this solenoid type valve 1, , comprises elastic thrust means 4, for example a spring, suitable to push the pin 2' and, thus, the occlusion member 2, towards the extracted position to close the passage in the duct and prevent, or interrupt, the flow of fuel through the duct 20, when the coil 3 is not powered.

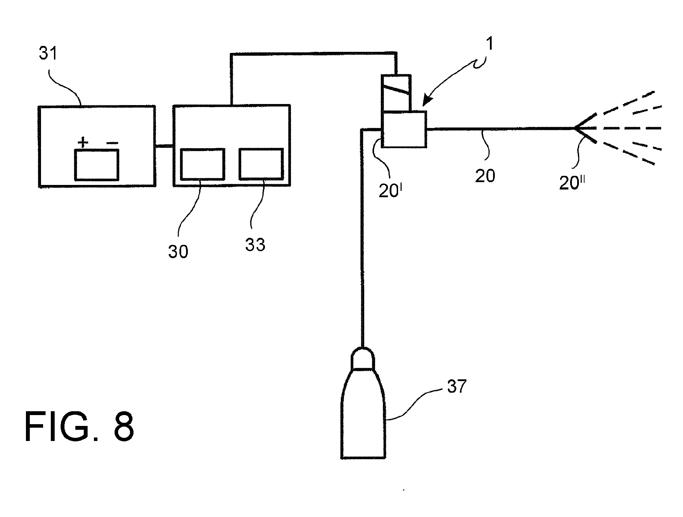

An example of a gas heater having a safety valve of the normally closed type is schematically represented in Figure 8.

In particular, the valve 1 is mounted directly along a duct leading from a gas cylinder 37 to the nozzle 20".

The heater 100 according to the invention comprises an automatic electronic control unit 30, electrically connected to the electromagnetic actuation means 3, able to vary the electric power supply voltage of the electromagnetic actuation means 3, and/or vary the electrical current that passes through such electromagnetic actuation means.

The control unit 30 is configured, or programmed, to perform at least the following steps:

electrically supplying said electromagnetic actuation means 3 at an actuation electric voltage value V1 through the duration of an actuation time interval 12, such as to displace said occlusion member 2 from the first position to the second position;

automatically decreasing the electric voltage from said actuation electric voltage value V1 to a maintenance electric voltage value V2, lower than the actuation electric voltage value V1 and such as to hold the occlusion member 2 in said second position, for a transient time interval 14 subsequent to said actuation time interval 12;

continuing to electrically supply the electromagnetic actuation means 3 at said maintenance voltage value V2 during a maintenance time interval 13 so as to hold the occlusion member 2 in said second position until the end of said operating time interval, wherein the occlusion member 2 automatically returns from said second position to said first position.

According to an embodiment, the actuation time interval 12 is less than the maintenance time interval 13.

According to an embodiment, the control unit 30 is configured, or programmed, to perform at least the following steps:

electrically supplying the electromagnetic actuation means 3 during an actuation time interval 12 of electric power at an actuation electric voltage value V1 to move the occlusion member 2 from the extended position to the retracted opening position;

decreasing the electric voltage from said actuation electric voltage value V1 to a maintenance electric voltage value V2, lower than the actuation electric voltage value V1 and such as to hold the occlusion member 2 in the second retracted opening position;

continuing to electrically power the electromagnetic actuation means 3 during a maintenance time interval 13 of electrically powering at said maintenance electric voltage value V2 to hold the occlusion member 2 in the retracted opening position.

According to an embodiment, the actuation time interval 12 is less than the maintenance time interval 13.

In general, the actuation time interval is intended to mean the duration, or temporal amplitude of the first interval, and maintenance time interval is intended to mean the duration, or temporal amplitude of the second interval.

In other words, in the case of a normally closed valve, before starting the heater i.e., when the heater is turned off, the safety valve is not electrically supplied and is in its rest position, in which the occlusion member is in the extended closing position. When the heater is started, the step is automatically performed of electrically supplying the electromagnetic actuation means 3 at an actuation electric voltage value V1, which is in fact a maximum voltage, sufficient to move the occlusion member 2 from the extended position to the retracted opening position.

Extended closing position and retracted opening position are intended to mean the respective opposite end positions of the stroke of the occlusion member.

After the actuation time interval, which a particularly reduced time, sufficient to make the occlusion member perform a complete stroke from the extended closing position to the retracted opening position, the step is performed of decreasing the electric voltage from the actuation electric voltage value V1 to a maintenance electric voltage value V2, lower than the actuation electric voltage value V1 and such as to hold the occlusion member 2 in the second retracted opening position.

This step of decreasing the voltage is performed over a transient time interval 14.

At the end of the transient interval 14 and, thus, after the voltage has been brought to the second value V2, the step begins of continuing to electrically supply the electromagnetic actuation means 3 with a voltage equal to the maintenance electric voltage value during the electrical power maintenance time interval 13, i.e., until the occurrence of any event that interrupts the electric power supply of the actuation means, for example when it is decided to turn off the heater or when an accidental extinguishing of the flame in the combustion chamber is detected.

According to an embodiment, an amplitude of the actuation time interval 12 is chosen such as to allow a full stroke of the occlusion member 2 from the extended position to the retracted position during the actuation time interval 12.

In other words, the actuation time interval 12 is substantially equal to the time necessary for the occlusion member 2 to move from the extended position to the retracted position.

The duration of said actuation time interval is, for example, between 3 milliseconds and 300 milliseconds, preferably between 5 milliseconds and 100 milliseconds, more preferably about 10 milliseconds.

According to an embodiment, the first power supply value V1 is chosen to be substantially equal to a nominal voltage value, predetermined in the construction phase of the valve, for example 12V.

According to an embodiment, the maintenance electric voltage value V2 is chosen so as to be sufficient to hold the occlusion member in the retracted opening position, after the occlusion member has reached this retracted position.

According to an embodiment, maintenance electric voltage value V2 is less than 30% with respect to the actuation electric voltage value V1, preferably lower than 20% with respect to the actuation electric voltage value V1, still more preferably, substantially of 10% of the actuation electric voltage value V1.

According to an embodiment, the first voltage value is about 12V and the second voltage value is approximately 6V, preferably 4V, still more preferably 1 V.

Experimental tests on a safety valve for portable heaters, of the normally closed solenoid type, and powered at its nominal voltage of 12V, showed an absorption of electric current substantially equal to 0.65A, and an electric power consumption of about 8W. The same solenoid safety valve was able to ensure its open position, holding the occlusion member in the retracted position in safety, even after a reduction of the power supply voltage to a second value of 4V and a current of 0.28A, and an electrical power consumption of about 1.1 W.

Surprising results in terms of energy savings while ensuring safe operation have been obtained by reducing the voltage to 1V, corresponding to an electric current of only 0.06A, and a surprisingly reduced consumption substantially equal to 0.06W.

This technique thus allows reducing energy consumption by about 90% compared to powering the valve at a constant voltage equal to its nominal voltage.

According to an embodiment, over the actuation time interval 12, the actuation means 3 are powered with an electric voltage substantially continuous and constant, in particular substantially equal to the actuation electric voltage value V1.

According to an embodiment, over the maintenance time interval 13, the actuation means 3 are powered with an electric voltage substantially continuous and constant, in particular substantially equal to the maintenance electric voltage value V2.

According to an embodiment, the step of decreasing the electric voltage is performed over a transient time interval 14 interposed between the actuation time interval 12 and the maintenance time interval 13.

According to an embodiment, the transient time interval 14 has an amplitude substantially equal to zero, giving rise to a sudden, or instantaneous, decrease of the voltage between the first voltage value V1 and the second voltage value V2.

Alternatively, the transient time interval 14 has an amplitude greater than zero, in particular said transient time interval is less than the maintenance time interval 13.

According to an embodiment, the transient time interval is greater than the actuation time interval 12.

A non-sudden decrease of the power supply voltage of the electromagnetic actuation means 3, in particular of the solenoid, allows gradually accompanying the decrease of the electromagnetic force exerted by the solenoid 3 on the occlusion member 2, or on the sliding pin 2', when the power supply voltage is decreased. This allows counteracting any elastic return of the occlusion member 2 at the end of its very fast stroke from the extracted position to the retracted position. Such elastic return must be prevented to avoid the occlusion member 2 moving from the retracted position towards the extracted position, since moving from such retracted position would require a greater force of electromagnetic attraction to hold the sliding pin in position and, consequently, the occlusion member would return to the extracted position.

Consider, in fact, a solenoid valve with a sliding ferromagnetic pin. When the pin 2' is inside the space of the solenoid, it is crossed by a greater number of lines of force of said magnetic field, so the holding force that results is increased, while, as the pin 2' exits from this position, an ever smaller number of lines of force of the magnetic field cross it and, therefore, a lower holding force can be exerted with the same power supply voltage.

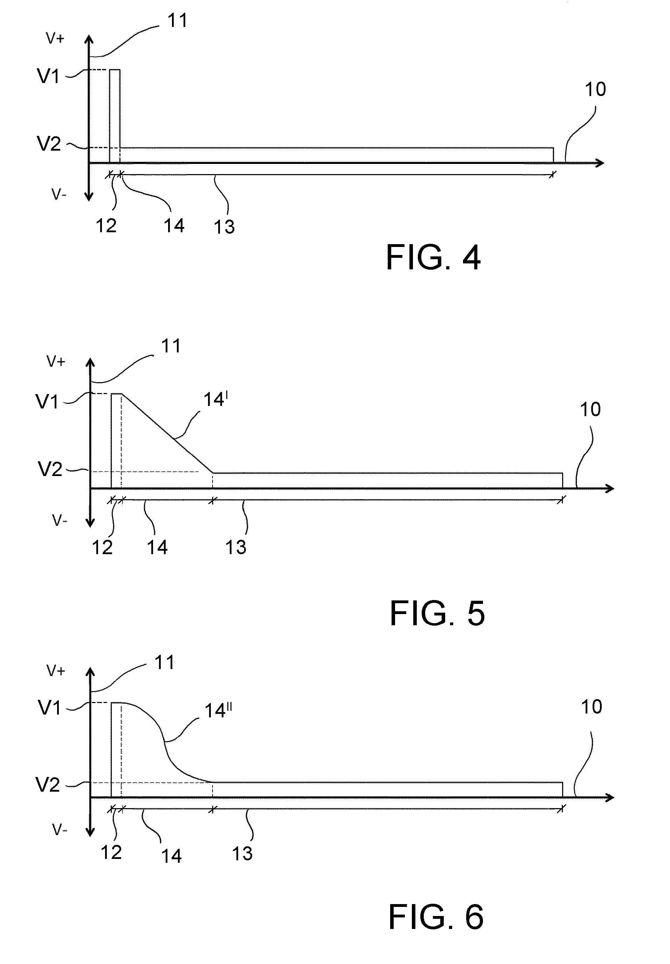

According to an embodiment, the step of decreasing the electric voltage from the first voltage value V1 to the second voltage value V2 occurs according to a linearly decreasing curve (Figure 5).

According to an embodiment, the step of decreasing the electric voltage from the first voltage value V1 to the second voltage value V2 occurs according to a decreasing curve tangent to a trend of the electric voltage over the actuation time interval 12 and, in addition, or alternatively, to a trend of the electric voltage over said maintenance time interval 13 (Figure 6). Such a feature allows optimizing and maximizing an accompanying effect of the voltage reduction described above, thus allowing obtaining the best results.

According to an embodiment, the heater 100 comprises a direct conversion assembly 40 of a temperature differential into electricity, for example comprising at least one Seebeck effect thermoelectric conversion cell.

Such at least one conversion cell 40 can be mounted on the heater 100 so as to receive a temperature differential between the inside of the combustion chamber 101 and the outside environment.

In particular, the at least one cell is arranged with its hot side in a heat exchange relationship with the combustion chamber, and with its cold side in heat exchange relationship with the outside environment, or with a forced cooling flow.

The electricity produced by such at least one conversion cell 40 can be conveyed, or connected, to electrically power the electromagnetic actuation means 3 of the safety valve and, also, for example, the electronic, in particular, automatic, control unit 30.

According to an embodiment, the portable heater 100 comprises an electric power accumulator 31 suitable to electrically power the electromagnetic actuation means 3 of the safety valve and also, for example, the electronic control unit 30.

According to an embodiment, the electric power accumulator 31 is connected to be recharged by the electric power produced by the at least one conversion cell 40.

According to an embodiment, the portable heater 100 comprises at least one fan 51 operable by an electric actuator 50, or electric motor, disposed to generate a forced flow of combustion air in the combustion chamber 101 and/or to output into the environment a flow of air heated by the combustion chamber 101, wherein said electric actuator is powered by said electric power produced by at least one conversion cell 40 or by said electric power accumulated in said electric power accumulator 31.

According to an embodiment, the heater comprises an electric power managing unit 33 suitable to receive the electric power produced by the at least one conversion cell 40 and redistribute it in a controlled manner between the accumulator 31, to recharge such accumulator 31 and/or to receive from said electric power accumulator and to supply the control unit 30 and the safety valve 1.

According to embodiments of the invention, the heater 100 further comprises on board electrical devices, in particular at least one of:
- a second electric fan,
- an ignition device disposed in the combustion chamber 101 to ignite combustion,
- a electric pump for feeding the fluid fuel to the combustion chamber 101.

According to an embodiment, all of said further electrical devices are connected, for electric power supply, to said at least one Seebeck effect thermoelectric conversion cell.

According to an embodiment, all of said further electric devices are connected, for electric power supply of them, to an electric power accumulator, or on-board electric battery, in particular avoiding being connected to said at least one Seebeck effect thermoelectric conversion cell.

According to an embodiment, such further electric devices are connected to said electric power management unit 33 so as to be electrically powered by such management unit 33.

According to an embodiment, the heater 100 comprises a container compartment 103 suitable to contain inside at least one of said safety valve 1, said control unit 30, said energy management unit 33 and said accumulator 31.

In particular, this container compartment is configured to support said casing 102 containing the combustion chamber 101, and is fixed externally to said casing, said container having the basic function of supporting the heater 100.

According to an embodiment, in the first position of the occlusion member 2, the valve is in a fully open valve position, said occlusion member 2 allowing the fluid flow in the duct 20, and wherein, in said second position of the occlusion member 2, the valve is in a fully closed valve position, said occlusion member 2 preventing the passage of fluid through the duct 20.

In other words, such valve is of the "normally open" type, i.e., when the actuation means 3 are not powered it is open and automatically it closes when the power supply ceases, or the power supply voltage falls below a minimum maintenance voltage.

Such a valve of the normally open type is particularly suitable for use in a heater powered by liquid fuel, for example diesel.

Even this type of safety valve comprises a movable occlusion member 2 and electromagnetic actuation means 3, similar to the example described above.

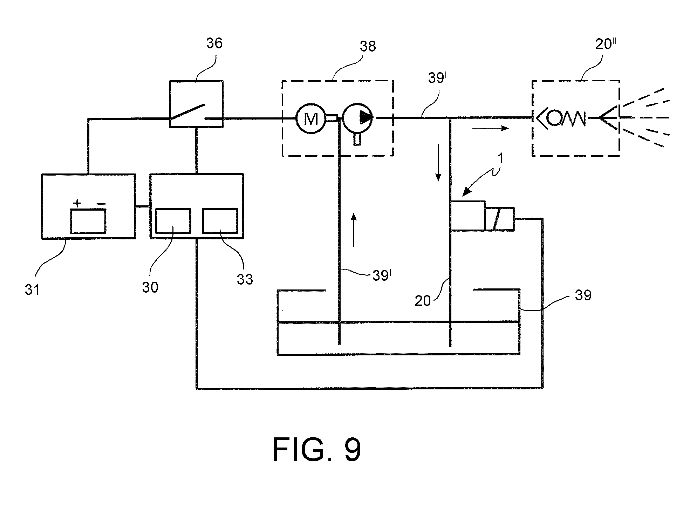

A possible example of liquid fuel heater having a valve of the normally open type and a control unit configured to perform the above steps is schematically represented in Figure 9.

According to this embodiment, an electric pump assembly 38 is mounted along a duct 39', to provide a liquid fuel, that extends from a tank 39, for example on board the heater, to the nozzle 20". A duct 20 fluidically connects the duct 39' to supply the liquid fuel, at a point which is interposed between the pump assembly 38 and the nozzle 20", with the tank.

In practice, the duct 20 has the function of a drain duct that allows a return of excess fuel between the pump assembly 38 and the nozzle 20".

The valve 1, in this example, is of the normally open type, i.e., when the heater is switched off, it is open and prevents the liquid fuel upstream of the nozzle from reaching a sufficient pressure to nebulize and be dispensed from the nozzle, allowing safe conditions. During operation, this valve 1 is kept closed by powering it electrically. In this condition, the fuel pressure upstream of the nozzle 20" operatively reaches a value high enough to nebulize through the nozzle 20".

Upon the occurrence of a dangerous situation, the power supply voltage of the actuation means of the valve is immediately interrupted, the valve 1 opens automatically reducing the fuel pressure upstream of the nozzle 20" and interrupting the supply of fuel.

According to another aspect of this invention, the above purposes and advantages are obtained by an electromagnetically actuated safety valve assembly 5 associable to a duct 20 for a fluid 21, comprising a safety valve 1 comprising an occlusion member 2 movable between a first position, for example an extended closing position wherein said occlusion member 2 prevents the fluid 21 from flowing in the duct 20, and a second position, for example a retracted opening position, wherein said occlusion member 2 allows the fluid 21 to flow into the duct 20;
electromagnetic actuation means 3 suitable to generate an electromagnetic field for actuating the electromagnetic actuation means 3, for example, to attract and operationally hold said occlusion member 2 in said retracted position when said electromagnetic actuation means 3 are electrically powered, and to release said occlusion member 2 in said extended position when said electromagnetic actuation means 3 are not electrically powered;
and an electronic control unit 30 as described above.

According to a further aspect of this invention, the above and other purposes and advantages are achieved by a method for controlling an electromagnetically actuated safety valve 1 for a fluid, connectable to a duct 20 suitable to be passed through by said fluid 21 for an operational time interval, said safety valve 1 comprising a second occlusion member 2 movable between a first position and a second position, and electromagnetic actuation means 3 to actuate the occlusion member 2.

According to an embodiment, said method comprises a step of electrically supplying said electromagnetic actuation means 3 at an actuation electric voltage value V1 through the duration of an actuation time interval 12, such as to displace said occlusion member 2 from the first position to the second position.

Such method further comprises a step of automatically decreasing the electric voltage from said actuation electric voltage value V1 to a maintenance electric voltage value V2, lower than the actuation electric voltage value V1 and such as to hold the occlusion member 2 in said second position, during a transient time interval 14 subsequent to said actuation time interval 12.

Such a method further comprises a step of continuing to electrically supply the electromagnetic actuation means 3 at said maintenance voltage value V2 during a maintenance time interval 13 so as to hold the occlusion member 2 in said second position until the end of said operating time interval, wherein the occlusion member 2 automatically returns from said second position to said first position.

According to an embodiment, said safety valve 1 comprises a second occlusion member 2 movable between an extended closing position wherein said occlusion member 2 prevents a fluid 21 from flowing in the duct 20, and a retracted position wherein said occlusion member 2 allows to said fluid 21 to flow in the duct 20, and electromagnetic actuation means 3 suitable to generate an electromagnetic field to operatively attract said occlusion member 2 in said retracted position when said electromagnetic actuation means 3 are electrically powered, and suitable to release said occlusion member 2 in said extended position when said electromagnetic actuation means 3 are not electrically powered.

The above-mentioned method comprises a step of electrically supplying the electromagnetic actuation means 3 during an actuation time interval 12 of electric power at an actuation electric voltage value V1 to move said occlusion member 2 from the extended closing position to said retracted opening position.

In addition, such method comprises a step of decreasing the electric voltage from said actuation electric voltage value V1 to a maintenance electric voltage value V2, lower than the actuation electric voltage value V1 and such as to hold the occlusion member 2 in said retracted opening position.

In addition, the above-mentioned method comprises a step of continuing to electrically supply said electromagnetic actuation means 3 during a maintenance time interval 13 at said maintenance electric voltage value V2 to hold said occlusion member 2 in said retracted opening position.

According to an embodiment, said actuation time interval 12 is lower than said maintenance time interval 13.

According to an embodiment, the actuation time interval 12 is chosen with an amplitude such as to allow a full stroke of the occlusion member 2 from the extended position to the retracted position during said actuation time interval 12.

According to an embodiment, over said actuation time interval 12, the actuation means 3 are supplied with a substantially continuous and constant electric voltage that is substantially the same as the actuation electric voltage value V1, and/or wherein, over said maintenance time interval 13, the actuation means 3 are supplied with a substantially continuous and constant electric voltage that is substantially the same as the maintenance electric voltage value V2.

According to an embodiment, maintenance electric voltage value V2 is less than 30% with respect to the actuation electric voltage value V1, preferably lower than 20% with respect to the actuation electric voltage value V1, still more preferably, substantially of 10% of the actuation electric voltage value V1.

According to an embodiment, the step of decreasing the electric voltage is performed over a transient time interval 14 interposed between the actuation time interval 12 and the maintenance time interval 13, wherein said transient time interval 14 is of an amplitude substantially equal to zero, or wherein said transient time interval 14 is of amplitude greater than zero, in particular said transient time interval is less than said maintenance time interval 13 and/or greater than said actuation time interval 12.

According to an embodiment, the step of decreasing the electric voltage from the first voltage value V1 to the second voltage value V2 occurs according to a decreasing linear curve 14' or according to a decreasing curve tangent to a trend of the electric voltage over the actuation time interval 12 and/or tangent to a trend of the electric voltage over said maintenance time interval 13.

From the description thus far provided, a skilled person can appreciate how the portable heater according to the invention achieves the purposes of the invention.

In particular this invention allows realizing a saving in electric power on average of 90% on the electrical actuation means of the valve. Considering that the electrical power on board the heater must also power additional electrical devices, the reduction of the overall power consumption can lead to a doubling of the autonomy of operation of the heater in the case where the power source is formed by electrical accumulators, or in a halving of the bulkiness of a Seebeck effect thermoelectric conversion group and thus a considerable reduction in the bulk of the heater.

To the forms of embodiment of the device described above, the skilled person, in order to satisfy contingent requirements, may make modifications, adaptations and replacements of members with others functionally equivalent, without departing from the scope of the following claims. Each of the characteristics described as belonging to a possible embodiment can be achieved independently from the other embodiments described.

## Claims

1. A method for controlling an electromagnetic actuated safety valve (1), connectable to a duct (20) suitable to be passed through by said fluid (21) during a working time interval,
said safety valve (1) comprising an occlusion member (2) movable between a first position and a second position, and electromagnetic actuation means (3) suitable to generate an electromagnetic field to actuate the occlusion member (2);
said method comprising the following steps:
- electrically supplying said electromagnetic actuation means (3) at an actuation electric voltage value (V1) through the duration of an actuation time interval (12), such as to displace said occlusion member (2) from the first position to the second position;
- automatically decreasing the electric voltage from said actuation electric voltage value (V1) to a maintenance electric voltage value (V2), lower than the actuation electric voltage value (V1) and such as to hold the occlusion member (2) in said second position, for a transient time interval (14) subsequent to said actuation time interval (12);
- continuing to electrically supply the electromagnetic actuation means (3) at said maintenance voltage value (V2) during a maintenance time interval (13) so as to hold the occlusion member (2) in said second position;
- stopping the electric supplying at the end of said working time interval, so that the occlusion member (2) automatically returns from said second position to said first position.

2. The method according to claim 1, wherein, in said first position of the occlusion member (2) the valve is in a fully closed valve position, said occlusion member (2) preventing the fluid flow in the duct (20), and wherein, in said second position of the occlusion member (2), the valve is in a fully open valve position, said occlusion member (2) allowing the passage of fluid through the duct (20), particularly, said fluid being a gaseous fuel or a liquid fuel.

3. The method according to claim 1 wherein, in said first position of the occlusion member (2) the valve is in fully open valve position, said occlusion member (2) allowing the fluid flow in the duct (20), and wherein, in said second position of the occlusion member (2) the valve is in fully closed valve position, said occlusion member (2) preventing the passage of fluid through the duct (20), particularly said fluid being a liquid fuel.

4. The method according to at least one preceding claim, wherein, over said actuation time interval (12), the actuation means (3) are supplied with a substantially continuous and constant electric voltage that is substantially the same as the actuation electric voltage value (V1), and/or wherein, over said maintenance time interval (13), the actuation means (3) are supplied with a substantially continuous and constant electric voltage that is substantially the same as the maintenance electric voltage value (V2).

5. The method according to at least one preceding claim, wherein the maintenance electric voltage value (V2) is less than 30% with respect to the actuation electric voltage value (V1), preferably lower than 20% with respect to the actuation electric voltage value (V1), still more preferably, substantially of 10% the actuation electric voltage value (V1).

6. The method according to at least one of the preceding claims, wherein said transient time interval (14) is greater than said actuation time interval (12).

7. The method according to claim 6, wherein the step of decreasing the electric voltage from the actuation voltage value (V1) to the maintenance voltage value (V2) occurs according to a linearly decreasing curve (14').

8. The method according to claim 6, wherein the step of decreasing the electric voltage from the actuation voltage value (V1) to the maintenance voltage value (V2) occurs according to a decreasing curve tangent to a trend of the electric voltage over the actuation time interval (12) and/or tangent to a trend of the electric voltage over the maintenance time interval (13).

9. The method according to at least one claim 1 to 5, wherein said transient time interval (14) is of a amplitude substantially equal to zero.

10. A controlled safety valve assembly (5), associable to a duct (20) for a fluid (21), particularly a fuel, comprising:
- a safety valve (1) comprising an occlusion member (2) movable between a first position and a second position, and electromagnetic actuation means (3) suitable to generate an electromagnetic field to actuate said occlusion member (2);
- an electronic control unit (30), electrically connected to said electromagnetic actuation means (3), configured to carry out the method according to at least one claim 1 to 9.

11. A fluid fuel portable heater (100), comprising:
- a combustion chamber (101),
- a conveyance duct (20) for said fuel (21), opening into said combustion chamber (101),
- a safety valve (1) arranged along said conveyance duct (20), comprising an occlusion member (2) movable between a first position and a second position;
- electromagnetic actuation means (3) configured to displace the occlusion member (2) from the first position to the second position, and to hold said occlusion member in said second position, when said actuation means (2) are supplied at an actuation electric voltage value (V1), and said electromagnetic actuation means (3) being configured to automatically release the occlusion member (2) to return from the second position to the first position when said electromagnetic actuation means are supplied to an electric voltage value lesser than a maintenance voltage value (V2), or said actuation means cease to be supplied;
- an electronic control unit (30), electrically connected to said electromagnetic actuation means (3), configured to carry out the method for controlling a valve according to at least one claim 1 to 9.

12. The heater according to claim 11, wherein, in said first position of the occlusion member (2), the valve is in a fully closed valve position, said occlusion member (2) preventing the fluid flow in the duct (20), and wherein, in said second position of the occlusion member (2), the valve is in a fully open valve position, said occlusion member (2) allowing the passage of fluid through the duct (20), particularly said fluid being a gaseous fuel or a liquid fuel, or wherein
in said first position of the occlusion member (2), the valve is in a fully open valve position, said occlusion member (2) allowing the fluid flow in the duct (20), and wherein, in said second position of the occlusion member (2), the valve is in a fully closed valve position, said occlusion member (2) preventing the passage of fluid through the duct (20), particularly said fluid being a liquid fuel.

13. The portable heater according to claim 11, comprising an electric power accumulator (31) connected to electrically supply said electromagnetic actuation means (3) and said automatic electronic control unit (30).

14. The portable heater according to claim 11, comprising at least one cell (40) for converting a temperature differential into electric power, said at least one conversion cell (40) being mounted at the heater (100) to receive a temperature differential between the interior of the combustion chamber (101) and the external environment, said electric power produced by said conversion cell (40) being conveyed to electrically supply said electromagnetic actuation means (3) and said electronic control unit (30).

15. The portable heater according to claim 14, wherein said electric power accumulator (31) is connected to be recharged by said electric power produced by said at least one conversion cell (40).

16. The heater according to claim 15, comprising an electric power managing unit (33) connected to receive the electric power produced by the at least one conversion cell (40) and redistribute it in a controlled manner between the accumulator (31), to recharge such accumulator (31) and/or to receive electric power from said accumulator (31), and to supply the control unit (30) and the safety valve (1).
